(19)

Europäisches
Patentamt
European
Patent Office
Office européen
des brevets

(11) **EP 4 498 334 A1**

(12) **EUROPEAN PATENT APPLICATION**

(43) Date of publication:
**29.01.2025 Bulletin 2025/05**

(21) Application number: **23188486.7**

(22) Date of filing: **28.07.2023**

(51) International Patent Classification (IPC):
**G06V 10/82** *(2022.01)*   **G06V 10/98** *(2022.01)*
**G06V 20/58** *(2022.01)*

(52) Cooperative Patent Classification (CPC):
**G06V 20/58; G06V 10/82; G06V 10/98;
G06V 10/987**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **TOYOTA JIDOSHA KABUSHIKI
KAISHA
Toyota-shi, Aichi-ken, 471 8571 (JP)**

(72) Inventors:
• **ALJUNDI, Rahaf
  1140 BRUSSELS (BE)**
• **CALDARELLA, Simone
  1140 BRUSSELS (BE)**

(74) Representative: **Cabinet Beau de Loménie
158, rue de l'Université
75340 Paris Cedex 07 (FR)**

Remarks:
Amended claims in accordance with Rule 137(2)
EPC.

(54) **A COMPUTER-IMPLEMENTED METHOD FOR CORRECTING OUTPUT DATA FROM A MACHINE LEARNING CLASSIFICATION MODEL**

(57)     A computer-implemented method (20) for correcting a first output data from a first machine learning classification model trained to associate an encountered object with a training class among predetermined training classes, the method comprising the following steps:
a) acquiring an image of the at least one encountered object;
b) providing the image to the first machine learning classification model, wherein the first output data are representative of an area delimiting each encountered object.
c) providing the first output data to a second machine learning classification model trained to provide a second output data corresponding to the first output data discriminated between a first dataset and a second data set;
d) verifying by an operator that the first dataset corresponds to one of the predetermined training classes representative data; and
e) if the operator determines at least one discrimination error after said verification, updating the second machine learning classification model.

**20**

**FIG.2**

EP 4 498 334 A1

**Description**

BACKGROUND OF THE INVENTION

1. Field of the invention

The present disclosure relates to the field of vehicle assistance systems and, more particularly, to an apparatus and a method for correcting output data from a machine learning classification model.

2. Description of Related Art

Increased traffic density on the roads requires drivers of vehicles to pay full attention to surrounding vehicles while trying to avoid any possible obstacle on their travel path. However, as the human cannot remain continuously concentrated on all the tasks to be performed on the travel path in order to ensure its safety, this may lead to driving errors which can cause serious damage to the driver and their car and/or to the surroundings such as pedestrians or other vehicles.

Nearly all road accidents are due to human error, while the remaining accidents are attributed to environmental factors and mechanical features. In fact, human error is believed to play a role in 94% of accidents, encompassing driver's inattention, internal and external distractions, and inadequate surveillance. This makes driver failures or errors a significant concern for public safety.

The automation of vehicles then represents a major challenge for automotive safety and driving optimization. In an effort to eliminate human error while driving a vehicle, Advanced Driver Assistance Systems (ADAS), also known as "driver assistance systems" have been designed to guide the driver and assist him in risk anticipation by automating, improving, or adapting some or all of the tasks related to driving a vehicle. Thus, the driver can be relieved of tasks that may distract him.

These driver assistance systems rely generally on sensors to assist the driver throughout their journey and often communicate with a server to receive real-time information along the vehicle's route. Modem assistance driver systems also provide additional information related to the route, such as weather conditions, traffic congestion, duration, and disruptions on the road (diversions or lane closures, for example). The driver assistance system can also be configured to provide information, including regulatory indications, such as speed limits or the presence of checkpoints.

Driver assistance may further encompass secondary tasks such as location finding and obstacle detection. In particular, it enables the anticipation of potential collisions, such as with stationary objects (traffic barriers, signs, or trees, for example) or with moving objects like other vehicles.

To detect obstacles in the vehicle's environment, existing perception solutions are commonly used. They rely on sensors as front-facing cameras for lane detection and obstacle recognition. To increase the accuracy of such recognition, various obstacle detection systems have been developed by using data fusion, machine learning classification models, and sensors such as LiDAR, radar, and GPS that collect data from the vehicle's external environment. The collected data is then processed, generally, leading either to autonomous vehicle decisions (e.g. automatic braking, engine power limitation) or to transmission of information to the driver through visual alerts, audio signals, or steering wheel vibrations, leaving then the driver in charge of making decisions.

To this end, the machine learning classification model is used to analyse the collected data, i.e. captured images or sensor readings, then to identify if an obstacle is present and, when appropriate, the location of said obstacle and its characteristics. The machine learning classification model assigns then a training class (or "label") to each identified obstacle among a plurality of its training classes.

In machine learning, a training class (or class) refers to a category to which collected data belongs. The aim of the machine learning classification model is then to classify data into one of these categories.

The training classes commonly used in obstacle recognition in the vehicle's environment are for example "pedestrians", "vehicles", "traffic signs", "animals and "debris". The "pedestrians" class includes for example individuals walking or running along the path of the vehicle. Thus, recognizing pedestrians is important for the driver assistance system in order to preserve the pedestrian safety.

Similarly, the training class "vehicles" may comprise various types of vehicles, such as cars, trucks, bicycles or motorcycles. Detecting and classifying vehicles is important for the driver assistance system in order to avoid collisions and preserve the passengers' safety.

However, when the vehicle encounters a new type of obstacle which was never analysed by the machine learning classification model during its training, the collected data may significantly differ from the distribution of the training data that the machine learning classification model was exposed to during training. Such data are commonly named OOD data (for "Out-Of-Distribution data").

Recognizing OOD data is important because it can introduce unexpected or unfamiliar obstacles that the machine learning classification model may struggle to detect or respond to appropriately. In such cases, the machine learning classification model may exhibit high confidence in incorrect predictions, posing potential safety risks or increasing the likelihood of accidents. Hence, it is advantageous to identify OOD data in order to take measures or enable appropriate fallback mechanisms to effectively handle unfamiliar situations and mitigate potential hazards.

In order to recognize OOD data, existing solutions propose providing to the machine learning classification model prior to its deployment in the driver assistance system additional set of OOD examples specifically designed to evaluate its ability to recognize and differentiate between in-distribution (ID) data, i.e. data that the machine learning classification model was exposed to during its training, and OOD data. The model's decisions boundaries (or discrimination boundaries) thus can no longer be refined once its training has been finished. In other words, once the model is deployed, it cannot update its decision boundaries when the vehicle encounters unexpected or unfamiliar obstacles on the vehicle's path.

SUMMARY

The object of the present invention is to at least substantially address the aforementioned drawbacks. In this respect, the aim of the invention is to provide a solution to update the decision boundaries of the machine learning classification model when the vehicle's encounter an unfamiliar object.

The present disclosures relates to a computer-implemented method for correcting a first output data from a first machine learning classification model trained to associate at least one encountered object on a path to be travelled by a vehicle with a specific training class among a plurality of predetermined training classes, the method comprising the following steps:

a) acquiring an image of the at least one encountered object;
b) providing the image to the first machine learning classification model, wherein the first output data are representative of an area delimiting each encountered object.
c) providing the first output data to a second machine learning classification model trained to provide a second output data corresponding to the first output data discriminated between a first dataset and a second dataset, the first dataset corresponding to at least one of the predetermined training classes representative data and the second dataset being different from all the predetermined training classes representative data;
d) verifying by an operator that the first dataset corresponds to one of the predetermined training classes representative data; and
e) if the operator determines at least one discrimination error after said verification, updating the second machine learning classification model by providing it with said image comprising annotations to update the second machine learning classification model's discrimination boundaries.

For conciseness, the method is referred to hereinafter as the correcting method.

As used herein, for conciseness and unless the context indicates otherwise, "a", "an", and "the" are intended to refer to "at least one" or "each" and to include plural forms as well. Conversely, generic plural forms include the singular. Further, the "at least one encountered object" comprises one encountered object or a plurality of encountered objects. Similarly, the "at least one discrimination error" comprise one discrimination error or a plurality of discrimination errors.

According to the present disclosure, providing feedback, after deployment of the vehicle, in form of annotations, improve the robustness of the second machine learning classification model to OOD data as the vehicle encounters objects that do not belong to one of the predetermined training classes of the first machine learning classification model.

The term "first output data representative of an area delimiting each encountered object" refers to the features, i.e., the first output data, generated by the first machine learning classification model for each detected object's delimited area. Subsequently, the second machine learning classification model utilizes these representative features to make predictions, i.e. the second output data.

It is also well known that in the field of machine learning, the "features" corresponds to the characteristics or attributes of input data that are used to make predictions or decisions.

Optionally, the steps c), d) and e) are repeated as long as new annotations are different from the second output data.

It is important to highlight that newly annotated OOD data may pertain to unknown classes that have not been identified in previous training or updating sessions of the second machine learning classification model. Thus, repeating these steps is advantageous as long as the second machine learning classification model continues to make mistakes in discrimination between the first dataset and the second dataset.

Optionally, the first dataset is sent to a cloud in order to be verified by the operator in step d).

The cloud refers to a network of remote servers that are hosted on the interned and used to store, manage, and process data instead of relying on a personal computer. In the case of vehicles, sending data to the cloud helps the automotive manufacturers to monitor vehicle performance, health and diagnostics wirelessly in real-time as they cannot retrieve data manually from a vehicle. Thus, by sending the first dataset and the second dataset, preferably, in real-time to the cloud, the operator can verify, without needing to access the vehicle, if the first dataset corresponds to at least one of the predetermined training classes representative data.

Optionally, second machine learning classification model is trained by using a supervised contrastive loss function and a binary cross entropy loss function.

The supervised contrastive loss function may refer to a loss function that compares representations of samples within the same class with representations of samples from different classes.

Optionally, the annotations are in form of a bounding box and/or a text and/or binary data.

Optionally, the second machine learning classification model is a multi-layer perceptron.

The multi-layer perceptron may refer to a specific type of neural network. It may be a feedforward neural network, meaning that the data flows in one direction, from input to output, without any cycles or loops.

Optionally, the discrimination between the first dataset and the first output data is binary discriminated between the first dataset and the second dataset.

Optionally, the object is a stationary object or a moving object.

For example, stationary objects may be a traffic barrier, signs or trees. A moving object may be in the form of another vehicle, a pedestrian or an animal for example.

Optionally, the image is captured by an on-vehicle camera.

The present disclosure further relates to a computer program set including instructions for executing the steps of the above-described computer-implemented method when said program set is executed by at least one computer.

This program set can use any programming language and take the form of source code, object code, or a code intermediate between source code and object code, such as a partially compiled form or any other desirable form.

The present disclosure further relates to an apparatus for correcting a first output data from a first machine learning classification model trained to associate at least one encountered object on a path to be travelled by a vehicle with a specific training class among a plurality of predetermined training classes, the apparatus comprising:

- an acquiring module configured to acquire an image of the at least one encountered object;
- a first providing module configured to provide the image to the first machine learning classification model, wherein the first output data are representative of an area delimiting each encountered object;
- a second providing module configured to provide the first output data to a second machine learning classification model trained to provide a second output data corresponding to the first output data discriminated between a first dataset and a second dataset, the first dataset corresponding to at least one of the predetermined training classes representative data and the second dataset being different from all the predetermined training classes representative data;
- a verifying module configured to verify that the first dataset corresponds to one of the predetermined training classes representative data; and
- an updating module configured to update, if the verifying module determines at least one discrimination error, the second machine learning classification model's discrimination boundaries by providing it with said image comprising annotations.

The apparatus referred to hereinafter as the correcting apparatus, may be configured to carry out the above-mentioned correcting method and may have part or all of the above-described features. The correcting apparatus may have the hardware structure of a computer.

The present disclosure also relates to a vehicle comprising an apparatus for correcting output data as described above.

The term "vehicle" may be directed to an apparatus capable of transporting people from one location to another, such as a car or a motorcycle.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- Fig. 1 is a block diagram of a correcting apparatus according to an embodiment of the present disclosure; and
- Fig. 2 is a flowchart of a correcting method according to an embodiment of the present disclosure.

DETAILED DESCRIPTION OF EMBODIMENTS

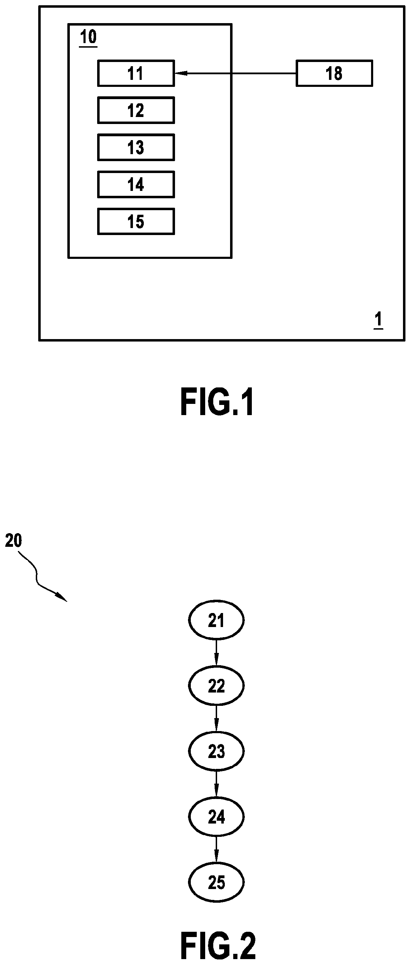

Figure 1 shows a block diagram of a correcting apparatus 10 comprising an acquiring module 11, a first providing module 12, a second providing module 13, a verifying module 14 and an updating module 15 according to embodiments of the present disclosure. The correcting apparatus 10 may be located inside a vehicle 1 which may be, without limitation, autonomous or semi-autonomous vehicles.

Alternatively, the correcting apparatus 10 may be partially located outside the vehicle 1. As a first example, functions of the first providing module 12, the second providing module 13, the verifying module 14 and the updating module 15 are executed via cloud computing. As a second example, only functions of the verifying module 14 and the updating module 15 are executed via cloud computing. Accordingly, the functions of the acquiring module 11, first providing module 12 and the second providing module 13 are then executed inside the vehicle 1.

The correcting apparatus 10 may be configured to correct a first output data from a first machine learning classification model trained to associate at least one encountered object on a path to be travelled by the vehicle with a specific training class among a plurality of predetermined training classes.

Such vehicle 1 may be directed to an apparatus capable of transporting people or objects from one location to another, such as a car or a motorcycle, and may be categorized into different levels based on the extent of automation and human involvement in the driving tasks.

The correcting apparatus 10 may comprise an electronic circuit, a processor (shared, dedicated, or group), a combinational logic circuit, a memory that executes one or more software programs, and/or other suitable components that provide the described functionality. In other words, the correcting apparatus 10 may be a computer device. The correcting apparatus 10 may be connected to a memory, which may store data, e.g. at least one computer program, which, when executed, carries out correcting method according to the present disclosure.

For example, the memory can be a ROM (for "Read Only Memory"), a CD ROM, a microelectronic circuit ROM, or in the form of magnetic storage means, for example, a diskette (floppy disk), a flash disk, a SSD (for "Solid State Drive") or a hard disk.

Alternatively, the memory can be an integrated circuit in which the program is incorporated, the circuit being adapted to execute the correcting method or to be used in its execution.

The acquiring module 11 is a module for acquiring an image of the at least one encountered object. The acquiring module 11 may receive said image from an on-vehicle camera (or embedded camera in the vehicle 1). It is preferable for the camera to be sufficiently precise to distinguish the contours of objects in the image that it captures.

As the image is captured by the on-vehicle camera, the image then represents the vehicle's surroundings and may be used in combination with other sensors 18, illustrated in Figure 1, as GPS system (for "Global Positioning Systems") that is configured to receive information on the location of the vehicle 1 and information about the trajectory to be travelled by the vehicle 1. Sensor 18 may be an on-vehicle sensor or a part of a structure outside the vehicle 1 that is able to communicate with the vehicle 1.

The vehicle's surroundings may be defined as the environment in which the vehicle 1 is travelling. It may comprise a specific physical space and objects around the vehicle 1.

In particular, the objects that may be encountered on the trajectory to be travelled by the vehicle 1 may be stationary objects or moving objects. The stationary objects are fixed or immobile in the vehicle's surroundings, such as parked cars, traffic barriers, road signs, buildings, or trees. While these stationary objects are not currently obstructing the vehicle's trajectory, they have the potential to become obstacles that may cause a collision with the moving vehicle 1 if it approaches them too closely or deviates from its intended trajectory.

The moving objects are in motion within the vehicle's surroundings, including other vehicles, pedestrians, cyclists, or animals. These moving objects have the potential to intersect with the vehicle's trajectory and create a collision if their trajectories converge.

The acquiring module 11 may be implemented may be implemented partially or fully as a hardware element of the correcting apparatus 10.

The first providing module 12 is a module for providing said captured image to the first machine learning classification model, wherein the first output data are representative of an area delimiting each encountered object.

The term "first output data representative of an area delimiting each encountered object" refers to the features, i.e., the first output data, generated by the first machine learning classification model for each detected object's delimited area. Subsequently, the second machine learning classification model utilizes these representative features to make predictions, i.e. the second output data.

It is also well known that in the field of machine learning, the "features" corresponds to the characteristics or attributes of input data that are used to make predictions or decisions.

The first providing module 12 may be implemented as software running on the correcting apparatus 10 or may be implemented partially as a hardware element of the correcting apparatus 10.

The second providing module 13 is a module for providing the first output data to a second machine learning classification model trained to provide a second output data corresponding to the first output data discriminated between a first dataset and a second dataset. The second machine learning classification model may be then designed to recognize and differentiate between the first dataset and the second dataset.

In particular, the first dataset may correspond to in-distribution data, which is the data that the first machine learning classification model was exposed to during its training and that is known as "predetermined training classes". It is also well-known that a training class refers to a category to which the first output data belongs. The aim of the first machine learning classification model is then to classify the first output data into one of these categories (or classes).

Accordingly, the first dataset corresponds to at least one of the predetermined training classes representative data.

The second dataset corresponds to data that are different from all the predetermined training classes' representative data. Such data are commonly named OOD data (for "Out-Of-Distribution data") and are important to identify as it can introduce unexpected or unfamiliar obstacles that the first machine learning classification model may struggle to detect or respond to appropriately. Thus, recognizing OOD data helps to take measures or enable appropriate fallback mechanisms to effectively handle unfamiliar situations and mitigate potential hazards.

It should be noted that the second providing module 13 may be implemented as software running on the correcting apparatus 10. The second providing module 13 may also be implemented partially as a hardware element of the correcting apparatus 10.

More precisely, the second machine learning classification model may be a multi-layer perceptron which may refer to a specific type of neural network wherein the data flows in one direction, from input to output, without any cycles or loops.

Of course, the second machine learning classification model may involve other configurations of neural networks since they are able to discriminate the first output data between OOD data and in-distribution data.

In order to identify the embedding where all the in-distribution data lie close together and far from all the other OOD data, the second machine learning classification model may be trained by using a supervised contrastive loss function.

To this end, the second providing module 13 is configured to process the following equations:

$$\ell_{\text{SupCon}} = \frac{1}{N} \sum_i^N \ell_{\text{SupCon}}(\mathbf{z}_i, P_i), \qquad (1)$$

$$\ell_{\text{SupCon}}(\mathbf{z}_i, P_i) = -\frac{1}{|P_i|} \sum_{\mathbf{z}_p \in P_i} \log \frac{\exp(\text{sim}(\mathbf{z}_i, \mathbf{z}_p)/\tau)}{\sum_{j \neq i} \exp(\text{sim}(\mathbf{z}_i, \mathbf{z}_j)/\tau)}, \qquad (2)$$

wherein:

- N is the total number of in-distribution and OOD data (samples);
- $j$ is an index that iterates over all samples;
- $\tau$ is an hyperparameter that relates to the softness of the softmax function of equation (2), noting that the softmax function, also known as the softargmax or the normalized exponential function, corresponds to the mathematical elements inside the above log function;
- $P_i$ is the set of representations $z_p$ forming positive pairs for the i-th sample, i.e. representations of the proposals of the same predetermined training class; and

wherein:

$$\text{sim}(\mathbf{z}_i, \mathbf{z}_j) = \frac{\mathbf{z}_i^\top \mathbf{z}_j}{\|\mathbf{z}_i\| \cdot \|\mathbf{z}_j\|} \qquad (3)$$

The second providing module 13 is further configured to process a binary cross entropy loss function in order to optimize a one dimensional projection that associates in-distribution data with high scores as opposed to OOD data. For this purpose, the second providing module 13 minimize the binary cross entropy loss with the following equation:

$$\ell_{BCE} = -\frac{1}{N} \sum_i^N \ell_{BCE}(\mathbf{z}_i, y_i)$$

(4)

wherein:

$$\ell_{BCE}(\mathbf{z}_i, y_i) = -\left[y_i \log(g(\mathbf{z}_i)) + (1 - y_i) \log(1 - g(\mathbf{z}_i))\right]$$ (5)

$$g(\mathbf{z}_i) = \frac{1}{1 + e^{-(\mathbf{w}^\top st(\mathbf{z}_i))}},$$

(6)

and wherein:

- $st$ is the stop gradient operation and w is the weight vector optimized for the one dimensional projection;
- $y_i$ is the label of $z_i$;
- N is the total number of in-distribution and OOD data (samples);
- i is an index that iterates over all samples; and
- w is the weight vector optimized for the one dimensional projection.

Accordingly, the second providing module 13 is configured to train the second machine learning classification model by using the supervised contrastive loss function and the binary cross entropy loss function in accordance with the following equation:

$$\ell_{ND} = \ell_{SupCon} + \ell_{BCE}$$

(7)

The verifying module 14 is a module for verifying that the first dataset corresponds to at least one of the predetermined training classes representative data.
The verifying module 14 may be implemented as software running on the correcting apparatus 10 or may be implemented partially as a hardware element of the correcting apparatus 10. It may be controlled either by a human operator, by a dedicated algorithm designed for this purpose, or be controlled by both the operator and said algorithm.
The updating module 15 is a module for updating, if the verifying module 14 determines at least one discrimination error, the second machine learning classification model's discrimination boundaries by providing it with said image comprising annotations.
The annotations, e.g. a bounding box and/or a text and/or binary data, may refer to labels or tags on the image with relevant information to assist the second machine learning classification model in understanding and making predictions. In other words, these annotations serve as a reference for the second machine learning classification model to learn from and improve its performance.
Accordingly, with these annotations, the second machine learning classification model's discrimination boundaries are thus updated.
The updating module 15 may be implemented as software running on the correcting apparatus 10 or may be implemented partially as a hardware element of the correcting apparatus 10.
The tasks carried out by the correcting apparatus 10 are detailed hereinafter with respect to the corresponding correcting method, an embodiment of which is illustrated in Fig. 2.
Figure 2 is a flowchart of the correcting method 20 according to an embodiment of the present disclosure. The correcting method 20 is a method for correcting the first output data from the first machine learning classification model trained to associate the at least one encountered object on the path to be travelled by the vehicle with one specific training class among the plurality of predetermined training classes.
The correcting method 20 comprises a step 21 of acquiring the image of the at least one encountered object. Said image may be acquired by the on-vehicle camera (or embedded camera in the vehicle 1).

That is, the correcting method 20 further comprises a step 22 performed by the first providing module 12 to provide the image to the first machine learning classification model, the first output data being representative of an area delimiting each encountered object.

The correcting method 20 further comprises a step 23 performed by the second providing module 13 to provide the first output data to the second machine learning classification model trained to provide the second output data corresponding to the first output data discriminated between the first dataset and the second dataset.

Then, the correcting method 20 comprises a step 24 performed by the verifying module 14 to verify that the first dataset corresponds to at least one of the predetermined training classes representative data.

Finally, the correcting method comprise a step 25 performed by the updating module 15 to update the discrimination boundaries of the second machine learning classification model by providing it with said image that comprises said annotations. The step 25 is performed if the verifying module 14 determines at least one discrimination error.

It should be noted that the steps 23, 24 and 25 may be repeated as long as new annotations are different from the second output data.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1. A computer-implemented method (20) for correcting a first output data from a first machine learning classification model trained to associate at least one encountered object on a path to be travelled by a vehicle (1) with a specific training class among a plurality of predetermined training classes, the method comprising the following steps:

    a) acquiring an image of the at least one encountered object;
    b) providing the image to the first machine learning classification model, wherein the first output data are representative of an area delimiting each encountered object.
    c) providing the first output data to a second machine learning classification model trained to provide a second output data corresponding to the first output data discriminated between a first dataset and a second dataset, the first dataset corresponding to at least one of the predetermined training classes representative data and the second dataset being different from all the predetermined training classes representative data;
    d) verifying by an operator that the first dataset corresponds to one of the predetermined training classes representative data; and
    e) if the operator determines at least one discrimination error after said verification, updating the second machine learning classification model by providing it with said image comprising annotations to update the second machine learning classification model's discrimination boundaries.

2. The computer-implemented method (20) according to claim 1, wherein the steps c), d) and e) are repeated as long as new annotations are different from the second output data.

3. The computer-implemented method (20) according to claim 1 or 2, wherein the first dataset is sent to a cloud in order to be verified by the operator in step d).

4. The computer-implemented method (20) according to any of claims 1 to 3, wherein the second machine learning classification model is trained by using a supervised contrastive loss function and a binary cross entropy loss function.

5. The computer-implemented method (20) according to any of claims 1 to 4, wherein the annotations are in form of a bounding box and/or a text and/or binary data.

6. The computer-implemented method (20) according to any of claims 1 to 5, wherein the second machine learning classification model is a multi-layer perceptron.

7. The computer-implemented method (20) according to any of claims 1 to 6, wherein the first output data is binary discriminated between the first dataset and the second dataset.

8. The computer-implemented method (20) according to any of claims 1 to 7, wherein the object is a stationary object or a moving object.

9. The computer-implemented method (20) according to any of claims 1 to 8, wherein the image is captured by an on-vehicle camera.

10. A computer program set including instructions for executing the steps of the method (20) of any one of claims 1 to 9 when said program set is executed by at least one computer.

11. An apparatus (10) for correcting a first output data from a first machine learning classification model trained to associate at least one encountered object on a path to be travelled by a vehicle (1) with a specific training class among a plurality of predetermined training classes, the apparatus (10) comprising:

- an acquiring module (11) configured to acquire an image of the at least one encountered object;
- a first providing module (12) configured to provide the image to the first machine learning classification model, wherein the first output data are representative of an area delimiting each encountered object;
- a second providing module (13) configured to provide the first output data to a second machine learning classification model trained to provide a second output data corresponding to the first output data discriminated between a first dataset and a second dataset, the first dataset corresponding to at least one of the predetermined training classes representative data and the second dataset being different from all the predetermined training classes representative data;
- a verifying module (14) configured to verify that the first dataset corresponds to one of the predetermined training classes representative data; and
- an updating module (15) configured to update, if the verifying module determines at least one discrimination error, the second machine learning classification model's discrimination boundaries by providing it with said image comprising annotations.

12. A vehicle (1) comprising an apparatus (10) according to claim 11.

**Amended claims in accordance with Rule 137(2) EPC.**

1. A computer-implemented method (20) for correcting a first output data from a first machine learning classification model trained to associate at least one encountered object on a path to be travelled by a vehicle (1) with a specific training class among a plurality of predetermined training classes, the method comprising the following steps:

a) acquiring an image of the at least one encountered object;
b) providing the image to the first machine learning classification model, wherein the first output data are representative of an area delimiting each encountered object, the first output data being generated by the first machine learning classification model for each detected object's delimited area,
c) providing the first output data to a second machine learning classification model trained to provide a second output data corresponding to the first output data discriminated between a first dataset and a second dataset, the first dataset corresponding to in-distribution data, which is the data that the first machine learning classification model was exposed to during its training, and the second dataset being Out-Of-Distribution data;
d) verifying by an operator that the first dataset corresponds to in-distribution data; and
e) if the operator determines at least one discrimination error after said verification, updating the second machine learning classification model by providing it with said image comprising annotations to update the second machine learning classification model's discrimination boundaries.

2. The computer-implemented method (20) according to claim 1, wherein the steps c), d) and e) are repeated as long as new annotations are different from the second output data.

3. The computer-implemented method (20) according to claim 1 or 2, wherein the first dataset is sent to a cloud in order to be verified by the operator in step d).

4. The computer-implemented method (20) according to any of claims 1 to 3, wherein the second machine learning classification model is trained by using a supervised contrastive loss function and a binary cross entropy loss function.

5. The computer-implemented method (20) according to any of claims 1 to 4, wherein the annotations are in form of a bounding box and/or a text and/or binary data.

**6.** The computer-implemented method (20) according to any of claims 1 to 5, wherein the second machine learning classification model is a multi-layer perceptron.

**7.** The computer-implemented method (20) according to any of claims 1 to 6, wherein the first output data is binary discriminated between the first dataset and the second dataset.

**8.** The computer-implemented method (20) according to any of claims 1 to 7, wherein the object is a stationary object or a moving object.

**9.** The computer-implemented method (20) according to any of claims 1 to 8, wherein the image is captured by an on-vehicle camera.

**10.** A computer program set including instructions for executing the steps of the method (20) of any one of claims 1 to 9 when said program set is executed by at least one computer.

**11.** An apparatus (10) for correcting a first output data from a first machine learning classification model trained to associate at least one encountered object on a path to be travelled by a vehicle (1) with a specific training class among a plurality of predetermined training classes, the apparatus (10) comprising:

- an acquiring module (11) configured to acquire an image of the at least one encountered object;
- a first providing module (12) configured to provide the image to the first machine learning classification model, wherein the first output data are representative of an area delimiting each encountered object, the first output data being generated by the first machine learning classification model for each detected object's delimited area;
- a second providing module (13) configured to provide the first output data to a second machine learning classification model trained to provide a second output data corresponding to the first output data discriminated between a first dataset and a second dataset, the first dataset corresponding to in-distribution data, which is the data that the first machine learning classification model was exposed to during its training, and the second dataset being Out-Of-Distribution data;
- a verifying module (14) configured to verify that the first dataset corresponds to in-distribution data; and
- an updating module (15) configured to update, if the verifying module determines at least one discrimination error, the second machine learning classification model's discrimination boundaries by providing it with said image comprising annotations.

**12.** A vehicle (1) comprising an apparatus (10) according to claim 11.

# FIG.1

# FIG.2

Europäisches
Patentamt

European
Patent Office

Office européen
des brevets

# EUROPEAN SEARCH REPORT

Application Number

EP 23 18 8486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bitterwolf Julian ET AL: "Breaking Down Out-of-Distribution Detection: Many Methods Based on OOD Training Data Estimate a Combination of the Same Core Quantities", arXiv (Cornell University), 20 June 2022 (2022-06-20), XP093117704, Ithaca DOI: 10.48550/arxiv.2206.09880 Retrieved from the Internet: URL:https://arxiv.org/pdf/2206.09880.pdf [retrieved on 2024-01-10] * abstract * * page 2, column 1 – page 2, column 1 * ----- | 1-12 | INV. G06V10/82 G06V10/98 G06V20/58 |

TECHNICAL FIELDS
SEARCHED       (IPC)

G06V

The present search report has been drawn up for all claims

| Place of search | Date of completion of the search | Examiner |
|---|---|---|
| The Hague | 11 January 2024 | Mitzel, Dennis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)